# EUROPÄISCHE PATENTSCHRIFT

(11) **EP 1 079 995 B1**
(45) Veröffentlichungstag und Bekanntmachung des Hinweises auf die Patenterteilung: **26.02.2003**
(21) Anmeldenummer: 99952085.1
(22) Anmeldetag: 03.05.1999
(51) Int. Cl.: B60R 21/22

(54) **ALS SCHUTZWAND VOR EINER FAHRZEUGSEITENWAND AUFBLASBARE AIRBAGEINRICHTUNG**
INFLATABLE AIR BAG SYSTEM WHICH SERVES AS A PROTECTIVE WALL IN FRONT OF A VEHICLE SIDEWALL
SYSTEME D'AIRBAG GONFLABLE SERVANT DE PAROI PROTECTRICE DEVANT UN PANNEAU LATERAL DE VEHICULE

(30) Priorität: 18.05.1998 DE 19822227
(43) Veröffentlichungstag der Anmeldung: 07.03.2001
(73) Patentinhaber: Volkswagen Aktiengesellschaft, 38436 Wolfsburg (DE)
(72) Erfinder: SINNHUBER, Ruprecht, D-38518 Gifhorn (DE)
(74) Vertreter: Neubauer, Hans-Jürgen, Dipl.-Phys.
(86) Internationale Anmeldenummer: EP9902991
(87) Internationale Veröffentlichungsnummer: WO99059845

(56) Entgegenhaltungen:
- EP-A- 0 847 904
- EP-A- 0 900 704
- WO-A-96/26087
- DE-A- 4 307 175
- DE-A- 4 337 656

## Beschreibung

Die Erfindung betrifft eine als Schutzwand vor einer Fahrzeugseitenwand aufblasbare Airbageinrichtung.

Eine gattungsgemäße Airbageinrichtung (DE-A-4307175) ist als Schutzwand vor einer Vertikalsäulen aufweisenden Fahrzeugseitenwand aufblasbar. Als Schutzwand aufblasbare Airbageinrichtungen sind auch bekannt aus den Dokumenten DE-U-29610920 und WO-A-96/26087. Diese umfassen einen Gasgenerator mit befüllbaren Rückhaltekissen, die im zusammengelegten Ruhezustand unter einem Verkleidungsteil eines seitlichen Dachlängsträgers verborgen sind. Bei einem Seitenaufprall wird der Gasgenerator durch einen Aufprallsensor aktiviert. Die Rückhaltekissen werden mittels eines Gasmassenstroms gefüllt und in eine Rückhaltestellung bewegt, in der sie den oberen Bereich der Seitenfenster der Fahrzeugwand abdecken. Die Rückhaltekissen sind dabei miteinander zu einer Rückhaltematte verbunden, die im wesentlichen entlang Ihrer gesamten Längsausdehnung im Bereich des seitlichen Dachlängsträgers verankert bleibt Der Füllvorgang der Rückhaltekissen erfolgt über ein Füllrohr als Metallrohr mit über die Länge versetzten Ausströmöffnungen. Dieses erstreckt sich ebenfalls entlang der gesamten Längsausdehnung im Bereich des seitlichen Dachlängsträgers und ist an den Gasgenerator angeschlossen. Solche Füllrohre als Gaslanzen am Metall oder Kunststoff haben nachteilig ein relativ großen Bauvolumen und großes Gewicht.

Eine solche Schutzwand dient insbesondere als Kopf-Seitenairbag zur Dämpfung eines Kopfaufschlags eines Insassen bei einem Seitenaufprall und/oder einem Überschlag-Weiter soll dadurch ein Partikelflug, beispielsweise von zerstörten Seitenscheiben, Verkleidungsteilen, etc. in den insassenraum verhindert werden.

Aufgrund der geringen Kopfabstände zu Fahrzeugseitenteilen sind gerade bei Seitenairbageinrichtungen sehr schnelle Aufblasvorgänge der Rückhaltekissen erforderlich, um diese noch vor einem Kopfaufprall vor die Fahrzeugseitenteile zu bringen. Trotz der bisher erreichten hohen Füllgeschwindigkeiten sind hier Verbesserungen weiter erstrebenswert. Ein Problem der Airbageinrichtungen besteht allgemein in der Aggressivität gegenüber Insassen, die insbesondere dann vorliegen kann, wenn sich ein Insasse in "out of position" (OOP) befindet.

In einer ähnlichen bekannten Airbageinrichtung (DE 196 47 679 A1) wird als Schutzwand eine Matte aus pneumatisch zusammenhängenden Wülsten aufgeblasen, dergestalt, daß an einer Stelle der Matte ein Gasgenerator angeschlossen ist und ein Gasmassenstrom eingeblasen wird. Ein in die Matte eingestecktes Füllrohr in der Art einer Gaslanze ist hier nicht vorgesehen. Durch die Füllung nur über eine Stelle ohne zusätzliche Füll- und Entfaltungshilfen dürfte der Fülivorgang relativ langsam mit einer nur wenig definierten Lage der Matte in der Rückhaltestellung sein.

Weiter ist eine Seitenaufprallschutzeinrichtung für Fahrzeuginsassen bekannt (DE 196 45 031 A1), bei der lediglich ein entfaltbarer Schutzvorhang bei einem Seitenaufprall von oben her über den Bereich der Fahrzeugfenster gezogen wird. Dazu ist eine vertikale Schienenführung vorgesehen, in der ein mit einer Seitenecke des Schutzvorhangs verbundenes Projektil mit Hilfe eines Gasgenerators nach unten bewegbar ist Dieser Schutzvorhang enthält keine aufblasbaren Rückhaltekissen, so daß die Schutzwirkung verglichen mit Airbageinrichtungen relativ gering ist.

Eine Entfaltungshilfe für einen in einem Fahrzeuginnenraum aus einen Dachbereich heraus aktivierbaren Seitenschutz beschreibt die DE-A-4337656.

Aufgabe der Erfindung ist es, eine gattungsgemäße Airbageinrichtung so weiterzubilden, daß ein sehr schneller Aufblasvorgang mit hohem Insassenschutz bei geringer Aggressivität insbesondere bei "out of position" möglich ist.

Diese Aufgabe wird mit den Merkmalen des Anspruchs 1 gelöst.

Gemäß Anspruch 1 ist wenigstens eines der Rückhaltekissen als Vertellerkissen ausgebildet, das von den mehreren Rückhaltekissen als erstes mit einem Gasmassenstrom aus dem Gasgenerator beaufschlagt ist Das Verteilerkissen bedeckt in der Rückhaltestellung zumindest teilweise eine zugeordnete Vertikalsäule. Zudem weist das Verteilerkissen Abströmöffnungen auf, durch die den weiteren Rückhaltekissen über Füllkanäle Teile des Gasmassenstroms aus dem Gasgenerator zuführbar sind. Die Rückhaltekissen können als Airbagkammem eines ein- oder mehrteilig ausgebildeten Gassacks ausgeführt sein.

Durch die Ausbildung eines Verteilerkissen, das als erstes mit einem Gasmassenstrom aus dem Gasgenerator beaufschlagt Ist und das vor einer Vertikaisäule aufgeblasen wird, besteht vorteilhaft schon kurz nach dem Beginn des Aufblasvorgangs ein wirksamer Aufprallschutz gegenüber einer Vertikalsäule. Zum Aufblasen des Verteilerkissens ist nur ein relativ geringer Gasmassenstrom erforderlich, so daß das Verteilerkissen sehr schnell aufgeblasen wird. Vom Aufblasvorgang des Verteilerkissens im Bereich der Vertikalsäule ist keine Aggressivität gegenüber einem Fahrzeuginsassen zu erwarten. Darüber hinaus ist in der Rückhaltestellung ein oberer Füllkanal im Bereich eines seitlichen Dachlängsträgers ortsfest angebracht und ein unterer Füilkanal liegt etwas oberhalb der Fensterbrüstung

Eine einfache und schnell befüllbare Anordnung wird besonders dann erreicht, wenn der obere Füllkanal und untere Füllkanal an ihren Enden zu einem Ringkanal verbunden sind und die Rückhaltekissen in ihrer Lage am jeweiligen Ringkanalbereich vom Ringkanal aus durch entsprechende Abströmöffnungen befüllbar sind. Die Rückhaltekissen werden dann zweckmäßig vom Dachhimmel und/oder von der Fensterbrüstung her über den Ringkanal durch entsprechende untere und obere Füllkanäle schnell aufgeblasen. Da das Verteilerkissen sehr schnell aufgeblasen wird und der Aufblasvorgang für die weiteren Rückhaltekissen über mehrere Abströmöffnungen des Verteilerkissens erfolgt, kann durch geeignete Dimensionierung der Abströmöffnungen hinsichtlich der Anordnung und des Durchmessers auch für die gesamte Airbageinrichtung ein sehr schnelles Aufblasen der Schutzwand erreicht werden. In Verbindung mit der Dimensionierung der Abströmöffnungen und von Füllkanälen ist eine gezielte Beeinflussung der Zeitabfolge und des Aufblasvolumens der weiteren Rückhaltekissen möglich, wodurch eine Anpassung an Fahrzeugspezifische und individuelle Gegebenheiten möglich ist

Das Verteilerkissen kann für eine gezielte Verteilung des Gasmassenstroms auch aus Kammern oder Gaskanälen bestehen. Weiter können ggf. durch Blenden und/oder Gasumleiter undloder Rückschlagventile der Füllvorgang und/oder die Standzeiten der Rückhaltekissen je nach den Erfordernissen beeinflußt werden.

Bei einem Fahrzeugüberschlag werden zweckmäßig beide Airbageinrichtungen auf beiden Fahrzeugseiten gezündet Zudem können an sich bekannte Stufengeneratoren eingesetzt werden, mit denen zur Verlängerung der Standzeit und/oder im Falle einer Multikollision in die Rückhaltekissen nachgeblasen werden kann.

Der Gasgenerator als stabiles Teil soll außerhalb eines potentiellen Kopfaufschlagbereichs von Front- und Fondinsassen des Fahrzeugs angeordnet werden, vorzugsweise in einem seitlichen Dachholm in der Nähe der B-Säule. Je nach den speziellen Gegebenheiten kann auch eine Anordnung des Gasgenerators in den Vertikalsäulen, im Kofferraum oder im Motorraum zweckmäßig sein.

Für eine gezielte und schnelle Befüllung der Rückhaltekissen wird vorgeschlagen, daß an die Abströmöffnungen des Gasverteilerkissens wenigstens ein mit den Rückhaltekissen verbundener Füllkanal angeschlossen ist.

In einer besonders vorteilhaften Anordnung deckt das Gasverteilerkissen in der Rückhaltestellung die B-Säule ab, wobei dann je nach Ausführungsform wenigstens ein aufblasbarer Füllkanal in Richtung einer A-Säule und/oder wenigstens ein aufblasbarer Füllkanal in Richtung einer C-Säule und/oder D-Säule vorgesehen werden kann. Dadurch ist in Verbindung mit einem schnellen Aufblasvorgang eine großflächige Abdeckung eines möglichen Kopfaufschlagbereichs an der Fahrzeugseitenwand durchführbar.

Zum Schutz von Front- und Fondinsassen werden ausgehend von einem Gasverteilerkissen im Bereich der B-Säule vordere und hintere Füllkanal- bzw. Ringkanalanordnungen mit zugeordneten Rückhaltekissen verwendet. Beim Aufblasen des Gasverteilerkissens werden dann die unteren Füllkanäle bzw. unteren Bereiche der Ringkanäle nach unten in Richtung der Fensterbrüstung bewegt Über die oberen und unteren Füllkanäle bzw. Bestandteile der Ringkanäle werden dann die Rückhaltekissen in einer bevorzugten Ausführungsform sowohl von oben als auch von unten her befüllt.

Bereits zu Beginn der Aufblasphase wird dadurch (bei noch nicht oder erst teilweise aufgeblasenen Rückhaltekissen durch deren Gewebematerial) ein Vorhang aus dem Dachhimmel oder der Dachverkleidung als Abweisschutz, beispielsweise gegen Glassplitter bei einem Überschlag ausgezogen.

Bei entsprechender Dimensionierung der Größenverhältnisse der Bestandteile insbesondere von Querschnittsverhältnissen der Füllkanäle und/oder von Abströmöffnungen können Zeitabfolgen beim Aufblasvorgang der Rückhaltekissen beeinflußt und vorgegeben werden. Vorteilhaft weist dazu der der A-Säule zugeordnete, wenigstens eine Füllkanal bzw. Ringkanalabschnitt einen größeren Querschnitt auf, als der der C- und/oder D-Säule zugeordnete, wenigstens eine Füllkanal bzw. Ringkanalabschnitt. Dadurch wird erreicht, daß die vorderen Rückhaltekissen für die Frontinsassen schneller gefüllt werden als die Rückhaltekissen für die Fondinsassen, da die Fondplätze für Fondinsassen statistisch gesehen nur wenig belegt sind.

In einer vorteilhaften Weiterbildung wird vorgeschlagen, dem Verteilerkissen und/oder den Füllkanälen eine Ventilanordnung zuzuordnen, durch die einzelne oder Gruppen von Abströmöffnungen hinsichtlich des Gasmassenstroms steuerbar sind. Die Ventile können dabei elektrisch oder pneumatisch steuerbar sein. Bevorzugt erfolgt jedoch eine Ventilsteuerung selbsttätig durch den Gasmassenstrom ggf. in Verbindung mit Gasmassengegenströmungen.

Bei entsprechenden Ventilsteuerungen kann dann zu Beginn des Aufblasvorgangs, beispielsweise der Hauptgasmassenstrom, in die Rückhaltekissen für die Frontinsassen geleitet werden. Wenn mit an sich bekannten Mitteln eine Sitzbelegung erkannt wird, kann ein entsprechend gesteuertes Ventil im Verteilerkissen beispielsweise bei nicht belegten Fondsitzen des Gasmassenstrom nur zu den Rückhaltekissen für die Frontinsassen lenken und die Rückhaltekissen für die Fondinsassen werden nicht befüllt.

Grundsätzlich entfaltet sich die Schutzwand beim Aufblasvorgang durch den in das Verteilerkissen, die Füllkanäle und die Rückhaltekissen eingeleiteten Gasmassenstrom. Um die Entfaltung und Positionierung des Verteilerkissens zu beschleunigen, kann zusätzlich ein Antriebsaggregat verwendet werden, das über ein Zugglied mit dem Verteilerkissen verbunden ist. Vorteilhaft kann dabei in an sich bekannter Weise ein pyrotechnisch betriebener Strammer ggf. in Verbindung mit einem Sicherheitsgurtstrammer eingesetzt werden. Als Zugglied kann dabei ein wenig Bauraum benötigendes Seil in einer Seitenverkleidung z. B. an der hinteren Seite einer Säule integriert sein. Vorteilhaft kann mit einer solchen Anordnung die Entfaltung der Schutzwand beschleunigt und ein Öffnungsschreck für einen betroffenen Insassen ebenso wie eine Belastung in einem "out of position"-Fall verringert werden.

Die Elemente der Airbageinrichtung können insgesamt oder zum Teil in Verkleidungsteilen oder einem Fertighimmel integriert und/oder darauf vormontiert sein, wodurch günstige Montagekosten bei einem geringen Bauraum erhalten werden. Die Gaskanäle sind dabei aus dem Kissengewebe hergestellt, was gegenüber bekannten Gaslanzen aus Stahl oder Kunststoff eine Bauraum- und Gewichtsreduzierung ermöglicht. Dazu tragen vorteilhaft auch Ventilanordnungen durch eingenähte Ventileklappen bei.

Anhand einer Zeichnung wird die Erfindung näher erläutert.

Es zeigen:
- Fig. 1: eine Seitenansicht auf die Innenseite einer Fahrzeugseitenwand mit einer aufgeblasenen Airbageinrichtung als Schutzwand,
- Fig. 2: einen Querschnitt im Bereich eines seitlichen Dachlängsträgers entlang der Linie A-A einer ersten Ausführungsform,
- Fig. 3: einen Querschnitt entsprechend Fig. 2 einer zweiten Ausführungsform,
- Fig. 4: einen Querschnitt durch einen Gaskanal der Airbageinrichtung aus Fig. 1 mit einem eingenähten Ventil,
- Fig. 5: einen vertikalen Längsschnitt durch eine alternative Ausführungsform eines Verteilerkissens entsprechend Fig. 1, und
- Fig. 6: eine schematische Darstellung eines pyrotechnischen Strammers zur Unterstützung der Entfaltung eines Verteilerkissens nach Fig. 1.

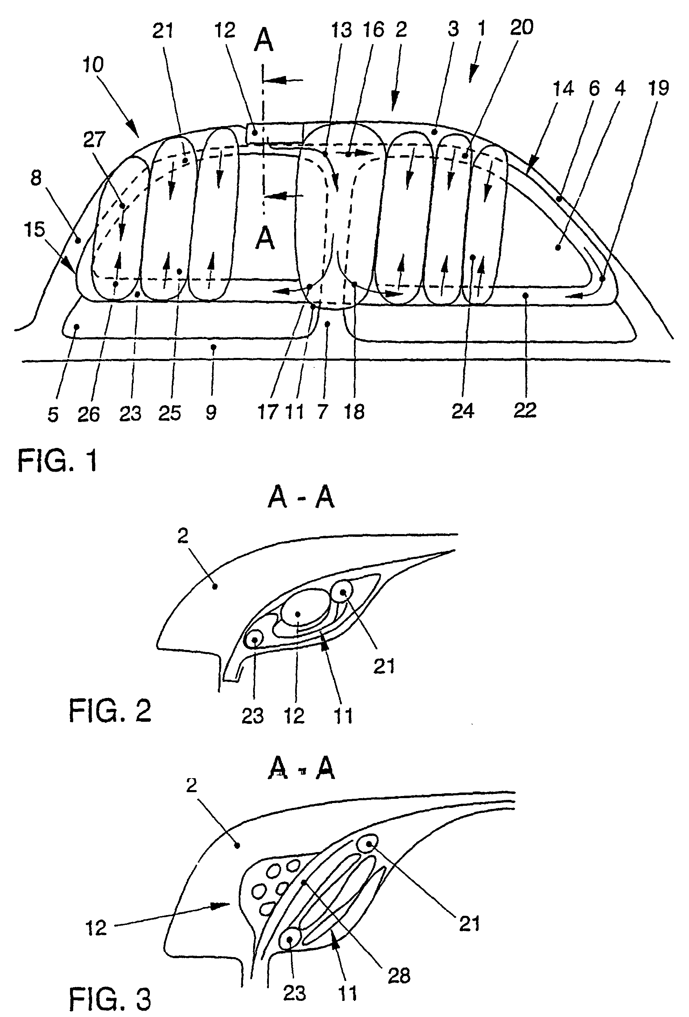

In Fig. 1 ist die Innenansicht eines Teils einer Fahrzeugseitenwand 1 schematisch dargestellt mit einem seitlichen Dachlängsträger 2, der durch ein Verkleidungsteil zum Insassenraum hin abgedeckt ist, mit einem vorderen Seitenfenster 4, mit einem hinteren Seitenfenster 5, mit einer A-Säule 6, einer B-Säule 7 und einer C-Säule 8 und mit einer unteren Fensterbrüstung 9.

Vor der B-Säule 7 ist als Bestandteil einer Airbageinrichtung 10 ein Gasverteilerkissen 11 aufgeblasen und positioniert, das über einen im seitlichen Dachlängsträger 2 angeordneten Gasgenerator 12 gefüllt wird. Ein entsprechender Gasmassenstrom ist durch den Strompfeil 13 angedeutet.

Über (nicht im einzelnen dargestellte) Abströmöffnungen und/oder Gaskanäle des Gasverteilerkissens 11 werden Gasmassenstromanteile einem vorderen Ringkanal 14 und einem hinteren Ringkanal 15 zugeführt, die sich jeweils mit einem Endbereich am oberen und unteren seitlichen Ende des Gasverteilerkissens 11 anschließen. Die Befüllung der Ringkanäle 14, 15 ist schematisch durch die Strompfeile 16, 17, 18 und 19 dargestellt.

Die Ringkanäle 14, 15 in Verbindung mit dem Gasverteilerkissen 11 liegen etwa vor den zugeordneten Rahmenteilen des vorderen und hinteren Seitenfensters 4, 5. Der vordere und hintere Ringkanal 14, 15 besteht dazu jeweils aus einem vorderen, oberen Füllkanal 20 und einem hinteren, oberen Füllkanal 21 sowie aus einem vorderen, unteren Füllkanal 22 und hinteren, unteren Füllkanal 23, wobei jeweils die unteren und oberen Füllkanalteile ringförmig zu den Ringkanälen 14, 15 miteinander verbunden sind. Die vorderen und hinteren unteren Füllkanäle 22, 23 weisen einen Abstand gegenüber der darunter angeordneten Fensterbrüstung 9 auf.

Im Bereich der Ringkanäle 14, 15 und vorzugsweise davor in Richtung des Insassenraumes angeordnet liegen vordere Rückhaltekissen 24 und hintere Rückhaltekissen 25 für Frontinsassen und Fondinsassen, von denen im konkreten Ausführungsbeispiel drei nebeneinanderliegend und zu einer Matratze verbunden eingezeichnet sind.

Die vorderen und hinteren Rückhaltekissen 24, 25 sind über Abströmöffnungen mit den zugeordneten oberen und unteren Füllkanälen 20 bis 23 verbunden und werden entsprechend der eingezeichneten Strompfeile 26, 27 sowohl von unten als auch von oben her aufgeblasen.

In den Fig.2 und 3 sind jeweils in einem Querschnitt A-A durch den seitlichen Dachlängsträger 2 im Bereich des Gasgenerators 12 alternative Ausführungsformen einer (noch nicht entfalteten) Airbaganordnung dargestellt.

In Fig. 2 ist zwischen einem Dachlängsträger 2 und einem Innenverkleidungsteil 3 ein im Querschnitt für eine gute Platzausnutzung ovaler Gasgenerator 12 dargestellt, an den das Gasverteilerkissen 11 (als gefaltetes Textilgewebe erkennbar) mit dem oberen Füllkanal 21 und unteren Füllkanal 23 angeschlossen ist. Diese Anordnung ist vorteilhaft als Modul ausgeführt und bildet zusammen mit dem Verkleidungsteil 3 eine Montageeinheit.

In einer ähnlichen, alternativen Ausführungsform nach Fig. 3 sind der Gasgenerator 12 in Verbindung mit einem Diffusor 28 im Dachlängsträger 2 integriert.

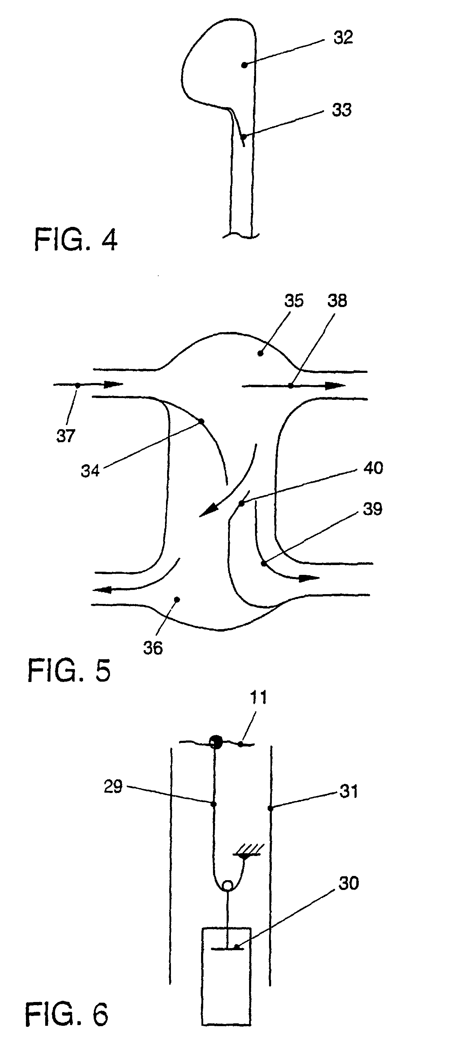

Die Anordnung nach den Fig. 1 bis 3 hat folgende Funktion: Bei einem relevanten Seitenaufprall wird mit dem Gasgenerator 12 zuerst das Gasverteilerkissen 11 im Bereich der B-Säule 7 von oben nach unten aufgeblasen, wodurch dieser Bereich schnell abgedeckt wird. Das Entfalten des Gasverteilerkissens 11 kann durch eine Zusatzeinrichtung noch beschleunigt werden, wie sie schematisch in Fig. 6 dargestellt ist. Dabei ist das Gasverteilerkissen 11 über ein Seil 29 mit einem Antriebsaggregat als pyrotechnisch antreibbarer Kolben 30 verbunden, wobei der pyrotechnische Treibsatz zusammen mit dem Gasgenerator 12 oder ggf. zeitlich versetzt dazu gezündet wird. Der pyrotechnisch angetriebene Kolben kann auch in einer Mehrfachfunktion Teil eines Sicherheitsgurtstrammers sein. Diese Anordnung kann in einem Verkleidungsteil 31 der B-Säule 7 aufgenommen sein.

Beim Aufblasen des Gasverteilerkissens 11 werden die unteren Füllkanäle 22, 23 in Richtung der Fensterbrüstung 9 nach unten bewegt und die vorderen und hinteren Rückhaltekissen 24, 25 über die oberen und unteren Füllkanäle 20 bis 23 aufgeblasen. In der Aufblasphase bilden die vorderen und hinteren Rückhaltekissen 24, 25 auch im noch nicht ganz aufgeblasenen Zustand einen Schutzvorhang, der dann weiter zu der Schutzwand mit gefüllten Rückhaltekissen 24, 25 aufgeblasen wird.

Für eine gezielte Steuerung und Lenkung der Gasmassenströme im Gasverteilerkissen 11, den Ringkanälen 14, 15 und den Rückhaltekissen 24, 25 werden Ventile verwendet.

Eine solche Anordnung ist in Fig. 4 schematisch dargestellt, wobei in einem der aus textilem Gewebe hergestellten Gaskanäle 32 ein Lappen als Ventil 33 in einem Gasweg eingenäht ist. Ein solches Ventil 33 kann durch den Gasmassenstrom und durch Gasmassengegenströmungen ohne einen zusätzlichen Ventilantrieb betätigt werden.

In Fig. 5 ist eine alternative Ausführungsform eines Gasverteilerkissens 11 dargestellt mit einer Zwischenwand 34 und einem beispielsweise elektrisch ansteuerbaren Ventil 40. Durch die Zwischenwand 34 sind eine erste Gasverteilerkammer 35 und eine zweite Gasverteilerkammer 36 geschaffen. Die erste Gasverteilerkammer 35 ist mit dem Gasgenerator 12 (Strompfeil 37) und dem vorderen, oberen und vorderen, unteren Füllkanal 20, 22 (Strompfeile 38, 39) verbunden. Wenn durch eine (nicht dargestellte) Sitzbelegungserkennung festgestellt wird, daß bei einem Seitenaufprall die zugeordneten Fondsitze nicht belegt sind, wird das Ventil 40 geschlossen, so daß nur die vorderen Rückhaltekissen 24 schnell befüllt werden. Wird dagegen festgestellt, daß auch die zugeordneten Fondsitze belegt sind, wird das Ventil 40 aufgesteuert, so daß auch die an die zweite Gasverteilerkammer 36 über die Füllkanäle 21, 23 angeschlossenen Rückhaltekissen 25 befüllt werden.

## Patentansprüche

1. Als Schutzwand vor einer Vertikalsäulen (6, 7, 8) aufweisenden Fahrzeugseitenwand (1) aufblasbare Airbageinrichtung (10) mit
- mehreren durch wenigstens einen Gasgenerator (12) befüllbaren, als Rückhaltekissen wirksamen Airbagkammem, die im zusammengelegten Ruhezustand unter wenigstens einem Verkleidungsteil (3) verborgen oder als integraler Bestandteil ausgebildet sind und durch Aktivierung des Gasgenerators (12) undloder einer Entfaltungshilfe aus dem Ruhezustand heraus in eine Rückhaltestellung bewegbar sind, in der zumindest Teile der Fahrzeugseitenwand (1) abgedeckt sind,
- wenigstens einem als Gasverteilerkissen (11) ausgebildeten Rückhaltekissen, das von den mehreren Rückhaltekissen als erstes mit einem Gasmassenstrom aus dem Gasgenerator (12) beaufschlagt ist, in der Rückhaltestellung eine der Vertikalsäulen (7) zumindest teilweise bedeckt und Abströmöffnungen aufweist, durch die den weiteren Rückhalteklssen (24, 25) Teile des Gasmassenstroms aus dem Gasgenerator (12) zuführbar sind,
**dadurch gekennzeichnet, daß**
- in der Rückhaltestellung ausgehend vom Gasverteilerkissen (11) sowohl wenigstens ein oberer Füllkanal (20, 21) im Bereich eines seitlichen Dachlängsträgers (2) ortsfest angebracht ist als auch wenigstens ein unterer Füllkanal (22, 23), der oberhalb einer Fensterbrüstung (9) der Fahrzeugseitenwand liegt.

2. Airbageinrichtung nach Anspruch 1, **dadurch gekennzeichnet, daß** der obere Füllkanal (20, 21) und untere Füllkanal (22, 23) zu einem Ringkanal (14, 15) verbunden sind.

3. Airbageinrichtung nach Anspruch 1 oder 2, **dadurch gekennzeichnet, dass** an die Abströmöffnungen wenigstens ein Füllkanal (20 bis 23) zum Befüllen der Rückhaltekissen (24, 25) angeschlossen ist, der in der Rückhaltestellung eine wenigstens an untere Seitenränder angepasste Kontur aufweist.

4. Airbageinrichtung nach Anspruch 1, **dadurch gekennzeichnet, daß** die durch das Gasverteilerkissen (11) abgedeckte Vertikalsäule eine B-Säule (7) ist, und daß wenigstens ein in Richtung einer A-Säule (6) aufblasbarer Füllkanal (20, 22) vorgesehen ist.

5. Airbageinrichtung nach Anspruch 1 oder Anspruch 4, **dadurch gekennzeichnet, daß** wenigstens ein in Richtung einer C- und/oder D-Säule (8) aufblasbarer Füllkanal (21, 23) vorgesehen ist

6. Airbageinrichtung nach Anspruch 2, **dadurch gekennzeichnet, daß** wenigstens eines der weiteren Rückhaltekissen (24, 25) innerhalb eines Ringkanalbereichs angeordnet ist und von dem jeweils zugeordneten Ringkanal (14, 15) aus befüllbar ist.

7. Airbageinrichtung nach Anspruch 1 oder Anspruch 6, **dadurch gekennzeichnet, daß** wenigstens eines der Rückhaitekissen (24, 25) von einer Fensterbrüstung (9) her aufblasbar ist.

8. Airbageinrichtung nach Anspruch 1 oder Anspruch 6, **dadurch gekennzeichnet, daß** wenigstens eines der Rückhaltekissen (24, 25) vom Dachhimmel her befüllbar ist.

9. Airbageinrichtung nach den Ansprüchen 4 und 5, **dadurch gekennzeichnet, daß** der der A-Säule (6) zugeordnete Füllkanal (20, 22) einen größeren Querschnitt aufweist als der der C- und/oder D-Säule (8) zugeordnete Füllkanal (21, 23).

10. Airbageinrichtung nach Anspruch 1, **dadurch gekennzeichnet, daß** dem Gasverteilerkissen (11) und/oder den Füllkanälen (20 bis 23) eine Ventilanordnung (33; 40) zugeordnet ist, durch die einzelne oder Gruppen von Abströmöffnungen hinsichtlich des Gasmassenstroms steuerbar sind.

11. Airbageinrichtung nach Anspruch 10, **dadurch gekennzeichnet, daß** die Ventilanordnung in das Gasverteilerkissen (11), in die Rückhaltekissen (24, 25) und/oder Füllkanäle (20 bis 23) eingenähte Ventile (33) als Ventillappen aufweist und die Ventile (33) durch den Gasmassenstrom betätigbar sind.

12. Airbageinrichtung nach Anspruch 1, **dadurch gekennzeichnet, daß** zur Unterstützung der Entfaltung der Schutzwand ein Antriebsaggregat (30) vorgesehen ist, das Ober ein Zugglied (29) mit dem Gasvertellerkissen (11) verbunden ist

13. Airbageinrichtung nach Anspruch 12, **dadurch gekennzeichnet, daß** das Antriebsaggregat durch einen pyrotechnisch antreibbaren Kolben (30) gebildet ist

14. Airbageinrichtung nach Anspruch 12, **dadurch gekennzeichnet, daß** das Zugglied ein Seil (29) ist

15. Airbageinrichtung nach einem der Ansprüche 12 bis 14, **dadurch gekennzeichnet, daß** wenigstens eines der Elemente Antriebsaggraget (30), Zugglied (29) oder Gasverteilerkissen (11) auf einem Verkleidungsteil (3) vormontiert ist.

16. Airbageinrichtung nach Anspruch 1, **dadurch gekennzeichnet, daß** der Gasgenerator (12) außerhalb potentieller Kopfaufschlagbereiche von Front- und Fondinsassen des Fahrzeugs angeordnet ist.

## Claims

1. Air-bag device (10) which can be inflated as a protective wall in front of a vehicle side wall (1) having vertical pillars (6, 7, 8), the said device having
- a plurality of air-bag chambers which can be filled by at least one gas generator (12), are effective as restraint cushions, and in the folded-up inoperative state are concealed under at least one panelling part (3) or are designed as an integral component part, and by activation of the gas generator (12) and/or an unfolding aid can be moved from the inoperative state into a restraint position in which at least parts of the vehicle side wall (1) are covered,
- at least one restraint cushion designed as a gas distributor cushion (11) which is the first of the plurality of restraint cushions to be subjected to a gas mass flow from the gas generator (12), at least partially covers one of the vertical pillars (7) in the restraint position, and has discharge openings through which portions of the gas mass flow from the gas generator (12) can be supplied to the other restraint cushions (24, 25), **characterized in that**
- in the restraint position, emerging from the gas distributor cushion (11), both at least one upper filling channel (20, 21) is provided in a fixed position in the region of a lateral roof longitudinal member (2) and at least one lower filling channel (22, 23) is provided, the latter lying above a window parapet (9) of the vehicle side wall.

2. Air-bag device according to Claim 1, **characterized in that** the upper filling channel (20, 21) and lower filling channel (22, 23) are connected to form an annular channel (14, 15).

3. Air-bag device according to Claim 1 or 2, **characterized in that** at least one filling channel (20 to 23) for filling the restraint cushions (24, 25) is connected to the discharge openings, the said filling channel, in the restraint position, having a contour which at least matches lower side edges.

4. Air-bag device according to Claim 1, **characterized in that** the vertical pillar which is covered by the gas distributor cushion (11) is a B-pillar (7), and **in that** at least one filling channel (20, 22) which can be inflated in the direction of an A-pillar (6) is provided.

5. Air-bag device according to Claim 1 or Claim 4, **characterized in that** at least one filling channel (21, 23) which can be inflated in the direction of a C-and/or D-pillar (8) is provided.

6. Air-bag device according to Claim 2, **characterized in that** at least one of the other restraint cushions (24, 25) is arranged within an annular-channel region and can be filled from the respectively assigned annular channel (14, 15).

7. Air-bag device according to Claim 1 or Claim 6, **characterized in that** at least one of the restraint cushions (24, 25) can be inflated from a window parapet (9).

8. Air-bag device according to Claim 1 or Claim 6, **characterized in that** at least one of the restraint cushions (24, 25) can be filled from the roof lining.

9. Air-bag device according to Claims 4 and 5, **characterized in that** the filling channel (20, 22) which is assigned to the A-pillar (6) has a larger cross section than the filling channel (21, 23) which is assigned to the C- and/or D-pillar (8).

10. Air-bag device according to Claim 1, **characterized in that** the gas distributor cushion (11) and/or the filling channels (20 to 23) is/are assigned a valve arrangement (33; 40) which can be used to control individual or groups of discharge openings with respect to the gas mass flow.

11. Air-bag device according to Claim 10, **characterized in that** the valve arrangement has, as valve tabs, valves (33) which are sewn into the gas distributor cushion (11), into the restraint cushions (24, 25) and/or filling channels (20 to 23), and the valves (33) can be actuated by the gas mass flow.

12. Air-bag device according to Claim 1, **characterized in that** a drive assembly (30), which is connected to the gas distributor cushion (11) via a tensile element (29), is provided in order to assist the unfolding of the protective wall.

13. Air-bag device according to Claim 12, **characterized in that** the drive assembly is formed by a piston (30) which can be driven pyrotechnically.

14. Air-bag device according to Claim 12, **characterized in that** the tensile element is a cable (29).

15. Air-bag device according to one of Claims 12 to 14, **characterized in that** at least one of the elements
- the drive assembly (30), tensile element (29) or gas distributor cushion (11) - is pre-assembled on a panelling part (3).

16. Air-bag device according to Claim 1, **characterized in that** the gas generator (12) is arranged outside potential head-impact regions of front and rear occupants of the vehicle.

## Revendications

1. Système d'airbag gonflable (10) servant de paroi protectrice devant un panneau latéral de véhicule (1) présentant des colonnes verticales (6, 7, 8), avec
- plusieurs chambres d'airbag à remplir par au moins un générateur de gaz (12) et agissant comme coussins de retenue, qui sont cachées à l'état de repos replié sous au moins une pièce de couverture (3) ou qui constituent un composant intégré et qui peuvent être mues, par activation du générateur de gaz (12) et/ou d'un accessoire de déploiement, de l'état de repos à une position de retenue, dans laquelle au moins des parties du panneau latéral de véhicule (1) sont masquées,
- au moins un coussin de retenue constituant un coussin de répartition de gaz (11), qui est le premier des multiples coussins de retenue à être alimenté par un courant massique de gaz provenant du générateur de gaz (12), qui en position de retenue couvre au moins en partie une des colonnes verticales (7) et présente des ouvertures d'échappement, par lesquelles des parties du courant massique de gaz provenant du générateur de gaz (12) peuvent être envoyées aux autres coussins de retenue (24, 25),
**caractérisé en ce que**
- dans la position de retenue, et partant du coussin de répartition de gaz (11), aussi bien au moins un canal de remplissage supérieur (20, 21) qu'au moins un canal de remplissage inférieur (22, 23), qui est situé au-dessus d'un appui de fenêtre (9) du panneau latéral de véhicule, sont fixés dans la région d'un longeron latéral de toit (2).

2. Système d'airbag suivant la revendication 1, **caractérisé en ce que** le canal de remplissage supérieur (20, 21) et le canal de remplissage inférieur (22, 23) sont réunis en un canal annulaire (14, 15).

3. Système d'airbag suivant la revendication 1 ou 2, **caractérisé en ce qu'**aux ouvertures d'échappement est raccordé au moins un canal de remplissage (20 à 23) pour le remplissage des coussins de retenue (24, 25), qui présente en position de retenue un contour adapté au moins à des bords latéraux inférieurs.

4. Système d'airbag suivant la revendication 1, **caractérisé en ce que** la colonne verticale masquée par le coussin de répartition de gaz (11) est une colonne B (7), et **en ce qu'**il est prévu au moins un canal de remplissage (20, 22) gonflable en direction d'une colonne A (6).

5. Système d'airbag suivant la revendication 1 ou 4, **caractérisé en ce qu'**il est prévu au moins un canal de remplissage (21, 23) gonflable en direction d'une colonne C et/ou D (8).

6. Système d'airbag suivant la revendication 2, **caractérisé en ce qu'**au moins un des autres coussins de retenue (24, 25) est disposé à l'intérieur d'une région de canal annulaire et peut être rempli à partir du canal annulaire respectivement associé (14, 15).

7. Système d'airbag suivant la revendication 1 ou la revendication 6, **caractérisé en ce qu'**au moins un des coussins de retenue (24, 25) peut être gonflé à partir d'un appui de fenêtre (9).

8. Système d'airbag suivant la revendication 1 ou la revendication 6, **caractérisé en ce qu'**au moins un des coussins de retenue (24, 25) peut être rempli à partir de la garniture du plafond.

9. Système d'airbag suivant les revendications 4 et 5, **caractérisé en ce que** le canal de remplissage (20, 22) associé à la colonne A (6) présente une section transversale plus grande que le canal de remplissage (21, 23) associé à la colonne C et/ou à la colonne D (8).

10. Système d'airbag suivant la revendication 1, **caractérisé en ce qu'**un dispositif de soupapes (33; 40) est associé au coussin de répartition de gaz (11) et/ou aux canaux de remplissage (20 à 23), par lequel les ouvertures d'échappement individuelles ou des groupes d'ouvertures d'échappement peuvent être réglés en ce qui concerne le courant massique de gaz.

11. Système d'airbag suivant la revendication 10, **caractérisé en ce que** le dispositif de soupapes présente des soupapes (33) sous forme de membranes de soupape, cousues dans le coussin de répartition de gaz (11), dans les coussins de retenue (24, 25) et/ou dans les canaux de remplissage (20 à 23), et les soupapes (33) peuvent être actionnées par le courant massique de gaz.

12. Système d'airbag suivant la revendication 1, **caractérisé en ce qu'**il est prévu, pour soutenir le déploiement de la paroi protectrice, un ensemble moteur (30) qui est relié au coussin de répartition de gaz (11) par un organe de traction (29).

13. Système d'airbag suivant la revendication 12, **caractérisé en ce que** l'ensemble moteur est formé par un piston (30) actionnable par pyrotechnie.

14. Système d'airbag suivant la revendication 12, **caractérisé en ce que** l'organe de traction est un câble (29).

15. Système d'airbag suivant l'une quelconque des revendications 12 à 14, **caractérisé en ce qu'**au moins un des éléments ensemble moteur (30), organe de traction (29) ou coussin de répartition de gaz (11) est préalablement monté sur une pièce de couverture (3).

16. Système d'airbag suivant la revendication 1, **caractérisé en ce que** le générateur de gaz (12) est disposé en dehors de régions d'impact potentiel de la tête des passagers avant et arrière du véhicule.
